# EUROPEAN PATENT SPECIFICATION

(11) **EP 2 216 532 B1**
(45) Date of publication and mention of the grant of the patent: **10.06.2015**
(21) Application number: 10152934.5
(22) Date of filing: 08.02.2010
(51) Int. Cl.: F02D 41/06, F02D 41/12, F02N 11/08, F02D 41/02, F02D 31/00

(54) **Controller for vehicle internal combustion engine**
Steuergerät für Fahrzeugverbrennungsmotor
Contrôleur pour véhicule à moteur à combustion interne

(30) Priority: 10.02.2009 JP 2009028913
(43) Date of publication of application: 11.08.2010
(73) Proprietor: TOYOTA JIDOSHA KABUSHIKI KAISHA, Toyota-shi, Aichi-ken, 471-8571 (JP)
(72) Inventor: Okamura, Kouji, Aichi-ken 471-8571 (JP); Nakamura, Yoshifumi, Aichi-ken 471-8571 (JP); Yoshihara, Masatomo, Aichi-ken 471-8571 (JP); Uchida, Akito, Aichi-ken 471-8571 (JP); Hatta, Yuuji, Aichi-ken 471-8571 (JP); Masuda, Satoshi, Aichi-ken, Aichi 448-8661 (JP)
(74) Representative: Winter, Brandl, Fürniss, Hübner, Röss, Kaiser, Polte - Partnerschaft mbB

(56) References cited:
- EP-A2- 2 213 870
- JP-A- 58 162 745
- JP-A- 2008 223 674
- JP-A- 2010 180 866

## Description

The present invention relates to a controller for a vehicle internal combustion engine, and more particularly, to controller for controlling startability when restarting an internal combustion engine that is capable of being automatically stopped and restarted under predetermined vehicle operating conditions.

Japanese Laid-Open Patent Publication No. 2008-223674 describes a controller for a vehicle internal combustion engine implementing the so-called economy running function The economy running function is a control that automatically stops operation of the internal combustion engine when predetermined vehicle operating conditions are satisfied When the conditions are no longer satisfied, the economy running function restarts the internal combustion engine. More specifically, the controller determines that an automatic stopping condition for stopping the internal combustion engine is satisfied when the following conditions (1) to (4) are satisfied:
(1) the vehicle is temporarily stopped due to a stoplight or the like, that is, the speed of the vehicle becomes less than or equal to a predetermined value;
(2) the engine coolant temperature is higher than or equal to a predetermined temperature;
(3) the gear of a manual transmission is in neutral; and
(4) the driver is not depressing the clutch pedal.

When the automatic stopping condition is satisfied, the controller sets the amount of fuel injected into the internal combustion engine to "0" and performs so-called fuel cutoff to automatically stop the engine. Then, as the driver, for example, depresses the clutch pedal and the controller thereby determines that a restarting condition has been satisfied, the controller restarts the internal combustion engine. Through these series of controls, the controller described above reduces the amount of fuel consumed by the internal combustion engine.

Japanese Laid-Open Patent Publication No. 2006-63913 describes an example of a constant engagement type starter for an internal combustion engine. A constant engagement type starter includes an output shaft on which a pinion gear is formed. A radially extending ring gear is formed on a crankshaft of the internal combustion engine. Engagement of the pinion gear and the ring gear is not limited to when the starter cranks, or starts, the engine. The pinion gear and the ring gear are constantly engaged with each other and transmit torque from the pinion gear to the crankshaft. The use of such a constant engagement type starter to start the engine is especially effective in the automatically stopped and restarted internal combustion engine of Japanese Laid-Open Patent Publication No. 2008-223674 in which the internal combustion engine is automatically started, that is, the engine is required to be restarted more quickly than when it is first started.

In the automatic stopping and restarting engine that uses such a constant engagement type starter, when a restarting condition is satisfied after the automatic stopping condition is satisfied and a process for stopping the operation of the engine is performed, the starter is actuated and fuel injection and ignition are performed to restart operation of the engine. In this state, when the amount the acceleration pedal is depressed by the driver is maintained at "0", that is, when the engine load applied to the operating internal combustion engine is subtle, the minimum engine speed required to Keep the engine running, for example, a target idling speed, is set as a target engine speed. However the engine load is very small when the engine is idling. Thus, continuous engine combustion from when the restarting condition is satisfied excessively increases the engine speed, which becomes greatly deviated from the target engine speed.
This may rev up the engine speed. To prevent such deviation, fuel cutoff is executed when the engine speed reaches a predetermined speed that is greater than the target engine speed. This prevents the engine speed from increasing excessively while keeping the engine speed higher than or equal to the target engine speed. An example is disclosed in EP 2 213 870 A2.

However, in a state in which the driver is not depressing the acceleration pedal, when load is applied to the internal combustion engine such that it becomes difficult to maintain the engine rotation with the torque produced during the engine operation in which the target engine speed is maintained, engine stall may occur.

Such a problem is not limited to a vehicle internal combustion engine that uses a constant engagement type starter. For example, the same problem would occur when an internal combustion engine performs restarting with a starter that engages the pinion gear and ring gear only when starting the engine. The same problem may also occur when an internal combustion engine includes a non-constant engagement type starter and a generator motor, in which the generator motor functions as a starter for restarting the engine after the engine is automatically stopped.

It is an object of the present invention to provide a controller that improves the restarting startability of a vehicle internal combustion engine that is capable of being automatically stopped and restarted under predetermined vehicle operating conditions.

One aspect of the present invention is a controller for a vehicle internal combustion engine that is capable of being automatically stopped and restarted under predetermined vehicle operating conditions. The internal combustion engine is connected to a manual transmission operated by a driver to shift gears. The controller restarts the internal combustion engine with a starter when a restarting condition for automatically restarting the internal combustion engine is satisfied after an automatic stopping condition for automatically stopping the internal combustion engine, which includes the manual transmission being in neutral, is satisfied. The controller sets as a target engine speed an engine speed that allows for the internal combustion engine to continue operating in a state in which the driver does not depress an acceleration pedal when the internal combustion engine restarts. The controller executes fuel cutoff to temporarily cut off fuel supply to the internal combustion engine when the engine speed is higher than or equal to a predetermined speed, which is higher than the target engine speed. Execution of the fuel cutoff is prohibited when the manual transmission is shifted to a gear other than neutral after the restarting condition is satisfied.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic diagram of an inline four-cylinder internal combustion engine used with a manual transmission according to one embodiment of the present invention;
Fig. 2 is a schematic partial cross-sectional view of a constant engagement type starter arranged in the engine shown in Fig. 1;
Fig. 3 is a diagram showing economy running modes shifted by an electronic control unit of Fig. 1;
Fig. 4 is a flowchart showing the procedures of a restarting process performed by a controller of Fig. 1;
Fig. 5 is a flowchart showing the procedures of a fuel cutoff flag process performed during a restarting process; and
Figs. 6(a) to 6(h) are timing charts taken during the restarting process of Fig.4 in which Fig. 6(a) shows an example of the shifting of driving modes, Fig. 6(b) shows the driving timing of the starter Fig. 6(c) shows an example of the transition of the engine speed, Fig. 5(d) shows the elapsed time Fig. 6(e) shows the shifting of gearshift positions. Fig. 6(f) shows the activation and deactivation of a clutch switch, Fig. 6(g) shows the activation and deactivation of an idle switch, and Fig. 6(h) shows the behavior of a fuel cutoff flag.

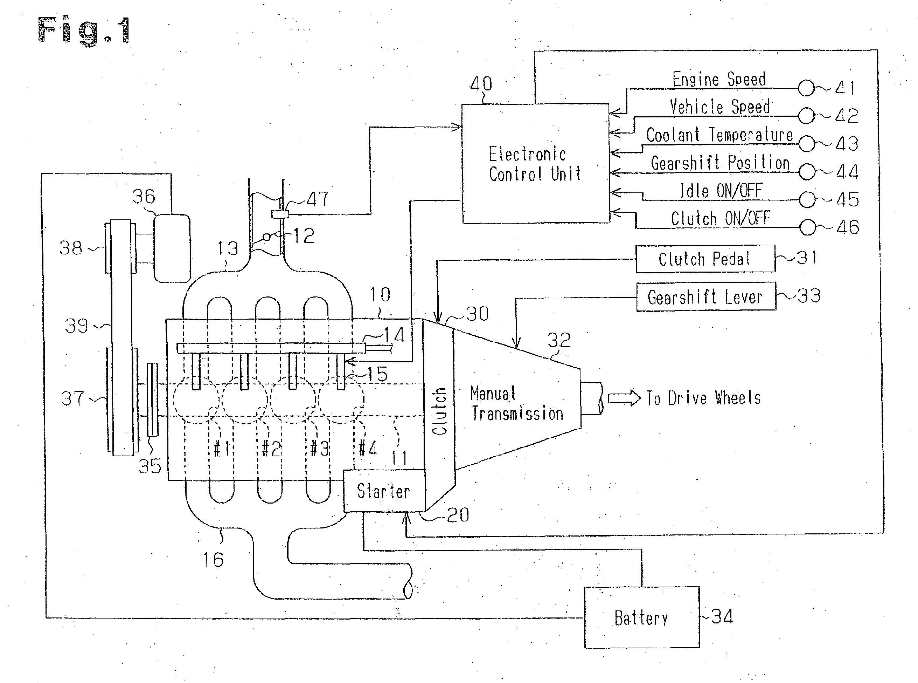

One embodiment according to the present invention will now be discussed with reference to Figs. 1 to 6. An internal combustion engine 10 of the present embodiment is instated in a vehicle that uses a manual transmission (MT vehicle). The internal combustion engine is capable of being automatically stopped and restarted under predetermined vehicle operating conditions.

Fig. 1 schematically shows an inline four-cylinder internal combustion engine 10, a manual transmission 32, and peripheral devices. The engine 10 includes four cylinders #1, #2, #3, and #4, which are arranged along a straight line. The four cylinders #1, #2, #3, and #4 are connected to an intake manifold 13, which supplies the cylinders #1, #2, and #4 with air, and an exhaust manifold 16, which exhausts combustion gas resulting from the combustion of an air-fuel mixture in the cylinders #1, #2, #3, and #4. The intake manifold 13 and exhaust manifold 16 are each branched from a single pipe into four pipes and coupled to the cylinders #1, #2, #3, and #4. Upstream to the branching point in the intake manifold 13, a throttle valve 12 regulates the flow rate of the intake air, and an airflow meter 47 measures the intake airflow rate. The engine 10 includes a fuel supply pipe 14, which pressurizes fuel and delivers the pressurized fuel to the cylinders #1, #2, #3, and #4 for combustion. Four fuel injection valves 15, which respectively inject fuel directly into the cylinders #1, #2, #3, wand #4, are coupled to the fuel supply pipe 14.

The cylinders #1, #2, #3, wand #4 each retain a piston. Combustion of the mixture of the air supplied from the intake manifold 13 and the fuel injected from the fuel injection valves 15 reciprocates the pistons in the cylinders #1, #2, #3, and #4. These pistons are each connected to a crankshaft 11 by a connecting rod, which converts the reciprocating motion to rotational motion. The crankshaft 11 has a first end connected to the manual transmission 32, and the crankshaft 11 is connected to drive wheels by the manual transmission 32. The driver operates a gearshift lever 33 in accordance with the operating state of the vehicle so that the manual transmission 32 shifts gears. Further, a clutch 30 is used to disconnect the crankshaft 11 from the manual transmission 32. A clutch pedal 31, which controls the disconnection of the clutch 30, is mechanically connected to the clutch 30 and arranged in front of the driver's feet in the passenger compartment. Further, the crankshaft 11 has a second end connected to a first pulley 37. A second pulley 38 is arranged on the end of an output shaft of a generator motor 36. A belt 39 runs between the first pulley 37 and the second pulley 38. The generator motor 36 uses the rotation of the crankshaft 11 to generator power, which is used to charge a battery 34. The generator motor 36 also functions as a motor for driving auxiliary devices, such as an air conditioner (more accurately, the compressor of the air conditioner), when the crankshaft 11 stops rotating. An electromagnetic clutch 35 is arranged at the portion at which the first pulley 37 is coupled to the crankshaft 11 to enable and disable the drive connection of the crankshaft 11 and generator motor 36.

When the engine 10 is operating, the intake manifold 13 supplies the cylinders #1, #2, #3, and #4 with air, the amount of which is regulated by the throttle valve 12 in accordance with the engine operating state. In the cylinders #1, #2, #3, and #4, a mixture of the supplied air and the fuel injected from the corresponding fuel injection valves 15 is combusted. This produces combusted gas exhausted through the exhaust manifold 16. The combustion converts the reciprocation of the pistons in the cylinders #1, #2, #3, and #4 to rotation of the crankshaft 11 with the connecting rods. The electromagnetic clutch 35 transmits the rotation of the crankshaft 11 to the generator motor 36 through the second pulley 38, which is connected to the crankshaft 11. This generates power with the generator motor 36. When the engine 10 is stopped and an auxiliary device such as the air conditioner (compressor) is driven, after the electromagnetic clutch 35 disconnects the crankshaft 11 and the first pulley 37, the generator motor 36 functions as a motor to drive the auxiliary device. Further, when the driver determines from the operating state of the vehicle that the gear must be shifted with the manual transmission 32, the driver fully depresses the clutch pedal 31. As a result, the clutch 30 disconnects the manual transmission 32 from the crankshaft 11. At about the same time as when the clutch pedal 31 is depressed, the driver shifts the gearshift lever 33 from the present gearshift position to the desired gearshift position. For example, when starting the vehicle, the gearshift lever 33 is shifted from the neutral position to the first gear position. The manual transmission 32 then selects the corresponding gear.

The engine 10 includes a starter 20. In a state in which the engine 10 is not running, when an ignition switch is activated, the starter 20 is supplied with power supplied from the battery 34 to rotate the crankshaft 11 so that the internal combustion engine 10 operates autonomously.

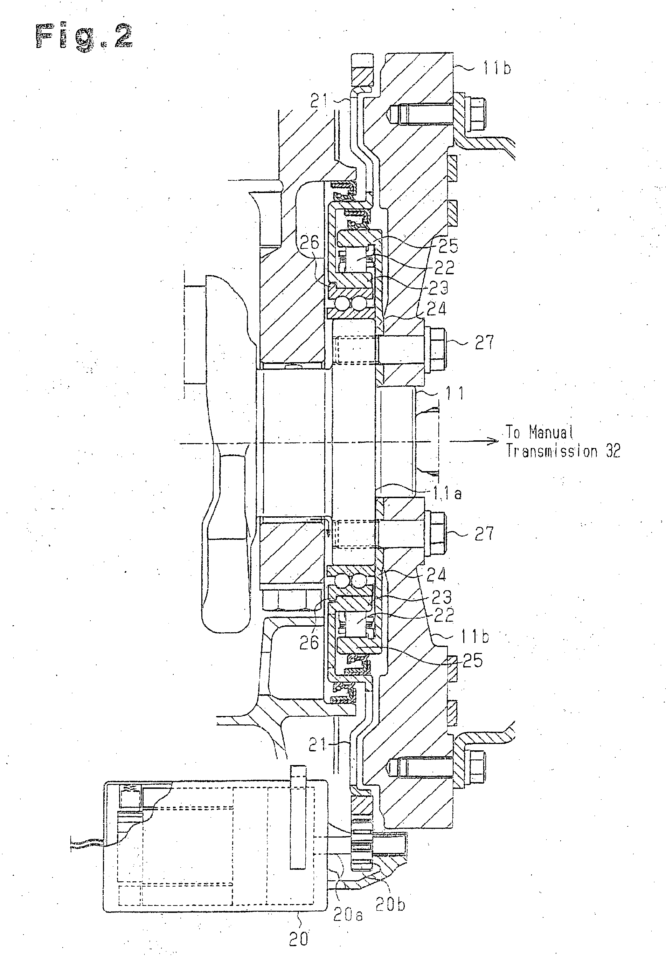

The starter 20 and a mechanism for transmitting torque from the starter 20 to the crankshaft 11 will now be discussed with reference to Fig. 2.

As shown in Fig. 2, the first end of the crankshaft 11, which is connected to the manual transmission 32, includes a large diameter portion 11a. A ball bearing 26 is fitted to the large diameter portion 11a. A ring gear 21 is arranged radically outward from the ball bearing 26. The ring gear 21 includes an inner race 23, which is arranged at the radially inward side of the ring gear 21 and fitted to the peripheral portion of the ball bearing 26. An annular outer race member 24 is arranged on the crankshaft 11. The outer race member 24 includes an outer race 25, which faces the inner race 23 in the radial direction and is arranged around the inner race 23. A one way clutch 22 is arranged between the inner race 23 and the outer race 25 to transmit torque only in one direction from the ring gear 21 to the outer race member 24. The one way clutch 22 also stops the transmission of torque in the same direction from the outer race member 24 to the ring gear 21. The outer race member 24 is fastened by bolts 27 to the large diameter portion 11a together with a flywheel 11b, which is fitted to the first end of the crankshaft 11. The flywheel 11b functions to suppress rotation differences of the crankshaft 11. The teeth arranged on the periphery of the ring gear 21 are constantly engaged with the teeth of a pinion gear 20b, which is arranged on an output shaft 20a of a starter 20.

When using the starter 20 to start the engine 10 from a stopped state, the transmission of power of the starter 20 is started and stooped as described below.

First, activation of the ignition switch drives the starter 20 with the power from the battery 34. The driving of the starter 20 rotates the pinion gear 20b, which is arranged on the output shaft 20a of the starter 20. The rotation of the pinion gear 20b is transmitted to the ring gear 21. Rotation of the ring gear 21 is then transmitted by the one way clutch 22 to the outer race member 24. This rotates the crankshaft 11, which is fastened to the outer race member 24,

The rotation of the crankshaft 11 starts autonomous operation of the engine 10. Then, when the rotational speed of the crankshaft 11 becomes higher than the rotational speed of the starter 20, that is, the rotational speed of the ring gear 21 rotated in cooperation with the starter 20, the rotation direction of the ring gear 21 is relatively reversed from the rotation direction of the outer race member 24, which is rotated in cooperation with the crankshaft 11. As a result, the one way clutch 22 disengages the ring gear 21 and the outer race member 24 to stop the transmission of torque from the crankshaft 11 to the starter 20 vie the outer race member 24 and the ring gear 21. Thus, even if the pinion gear 20b and the ring gear 21 are constantly engaged with each other, the starter 20 and the ring gear 21 are rotated only when necessary such as when starting the engine 10. In comparison to a starter that engages the pinion gear 20b and the ring gear 21 whenever the starter is driven, the constant engagement type starter 20 eliminates the time required to engage the gears 20b and 21. This shortens the time for starting the engine 10.

Referring to Fig. 1, in addition to the airflow meter 47, the engine 10 or the vehicle including the engine 10 includes other sensors for detecting the operating state of the vehicle. Such sensors include:
(I) an engine speed sensor 41, which detects the engine speed of the engine 10,
(II) a vehicle speed sensor 42, which detects the travel speed of the vehicle on which the engine 10 is mounted
(III) a coolant temperature sensor 43, which detects the temperature of the engine coolant used to cool the engine 10;
(IV) a gearshift position sensor 44, which detects the gear selected by the gearshift lever 33;
(V) an idle switch 45, which detects whether the engine 10 is operating in an idle state; and
(VI) a clutch switch 46, which detects depression of the clutch pedal 31 by the driver.

The detection signals of the sensors 41 to 46 and the detection signals of the airflow meter 47 are input to an electronic control unit 40. As the engine speed sensor 41, a crank angle sensor, which is arranged near the crankshaft 11 to detect the rotational angle of the crankshaft 11, is used. As the vehicle speed sensor 42, a wheel speed sensor, which detects the rotational speed of the drive wheel of the vesicle, is used. As the idle switch 45, a switch arranged near the throttle valve 12 and activated when detecting a fully closed state of the throttle valve 12 or a switch arranged near the acceleration pedal and activated when detecting that the driver is not depressing the pedal is used. Further, the clutch switch 46 is a switch that is deactivated in a so-called "clutch off state" in which the driver fully depresses the clutch pedal 31 and activated in a so-called "clutch on state" in which the driver does not the clutch pedal 31

The electronic control unit 40. which serves as a controller, is provided with a microcomputer, which includes a computation processor (CPU), a program memory (ROM), and a data memory (RAM) and executes various controls for controlling the fuel injection valves 15 and the starter 20. The electronic control unit 40 includes an input port, which receives the detection signals of the various sensors. 41 to 47 and serves as a peripheral circuit of the microcomputer, and drivers, which drive various actuators based on commands from the microcomputer. The input port of the electronic control unit 40 is electrically connected to the various sensors described above, and an output port is electrically connected to the fuel injection valves 15, the starter 20, and the like by the corresponding drivers.

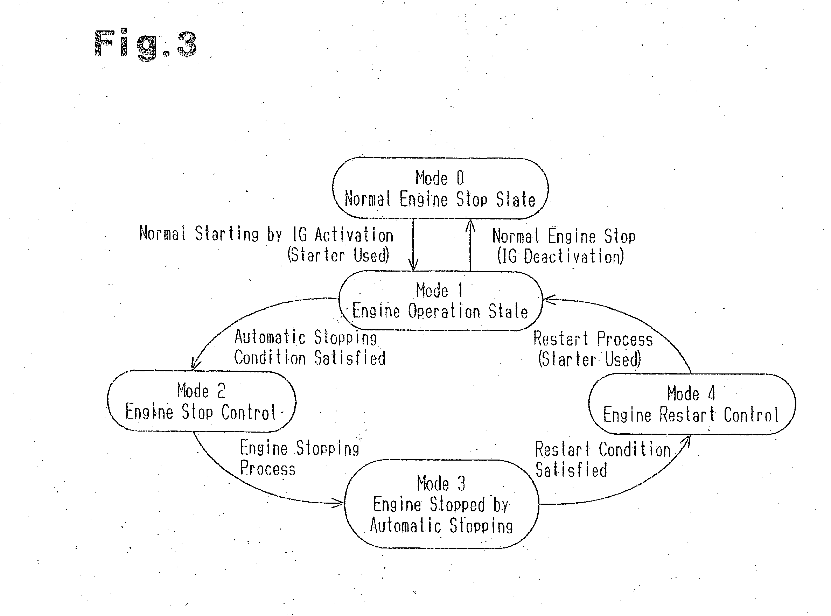

The electronic control unit 40 executes a control related with the so-called economy running, in which operation of the engine 10 is automatically stopped or restarted in accordance with the operating state of the vehicle on which the engine 10 is mounted or the operation of the vehicle. Control of the economy running will now be discussed with reference to Fig. 3.

As shown in Fig. 3. when the driver operates the ignition switch (IG) of a vehicle, which is in a stopped state, by changing the switch from an "OFF" position to an "ON" position and activates the electronic control unit 40, the electronic control unit 40 sets an economy running control mode to "mode 0", which is a mode normal stoppage of the engine 10. When the driver further operates the ignition switch to the "STA (start)" position, the starter 20 is driven to produce rotation rotating the crankshaft 11 and thereby starting the engine 10 When the starting is completed and autonomous operation of the engine 10 starts, the electronic control unit 40 the control mode to "mode 1", which indicates that the control mode of the electronic control unit 40 is in an engine operating state. In a state in which "mode 1" is set, when the driver operates the ignition switch again to change to the "OFF" position, the electronic cortrol unit 40 executes a normal engine stopping process to stop the engine 10 and shifts the control mode to "mode 0". When the control mode is set to "mode 1", the electromagnetic clutch 35 (refer to Fig. 1) connects the crankshaft 11 and the generator motor 36. Thus, the generator motor 36 is operated to generate the power in cooperation with the rotation of the crankshaft 11, and the battery 34 is charged with the generated power.

When the engine 10 is operating, that is, when the control mode is set to "mode 1", of, for example, the vehicle is temporarily stopped due to a stoplight or the like thereby satisfying automatic stopping condition for automatically stopping the engine 10, the electronic control unit 40 shifts the control mode from "mode 1" to "mode 2", The automatic stopping condition incudes the following conditions (1a) to (4a):
(1a) the speed of the vehicle is less than or equal to a predetermined value:
(2a) the engine coolant temperature is higher than or equal to a predetermined temperature;
(3a) the gear of the manual transmission 32 is in neutral; and
(4a) the clutch 30 is in an activated state.

In the present embodiment, the electronic control unit 40 determines that the automatic stopping condition for the internal combustion engine 10 is satisfied when all of the conditions (1a) to (4a) have been satisfied from the detection signals of the various sensors 42, 43, 44, and 46. Values used as thresholds for determining whether each of the above conditions is satisfied, such as a predetermined vehicle speed and a predetermined coolant speed, are calculated beforehand through experiments or the like and stored in the program memory (ROM) of the electronic control unit 40 (microcomputer).

In this manner, when the automatic stopping condition is satisfied and the control mode is set to "mode 2" to stop engine operation, the electronic control unit 40 stops injecting fuel into the cylinders #1, #2, #3, and #4. Then, when the operation of the engine 10 completely stops, that is, for example, when determining that the engine speed is "0" from the detection signal of the engine speed sensor 41, the electronic control unit 40 changes the control mode to "made 3", which indicates stoppage of engine operation through automatic stopping. When the control mode is in "mode 3", the electromagnetic clutch 35 disconnects the crankshaft 11 and the generator motor 36. When disconnected, the generator motor 36 is driven as a motor, and the output of the generator motor 36 drives auxiliary devices such as the air conditioner (compressor).

When the control mode is set to "mode 3" and a condition for restarting the engine 10 is satisfied, the electronic control unit 40 changes the control mode from "mode 3" to "mode 4" The restarting condition may be:
(5) the clutch 30 is deactivated.

In the present embodiment, when the electronic control unit 40 determines from the signal of the clutch switch 46 that the condition (5) has been satisfied, the electronic control unit 40 determines that the restarting condition of the engine 10 is satisfied.

In this manner, when the control mode is set to "mode 4", the constant engagement type starter 20 is driven, This rotates the crankshaft 11, injects fuel into the cylinders #1, #2, #3, and #4, and ignites the injected fuel to restart the engine 10. The electromagnetic clutch 35 reconnects the crankshaft 11 and the generator motor 36 so that the generator motor 36 functions as a generator. Then for example, when a condition is satisfied in which the engine speed of the engine 10 is greater than or equal to 800 rpm or the elapsed time from when the mode was shifted to "mode 4" is greater than or equal to 5000 msec, the electronic control unit 40 determines that the engine 10 has started autonomous operation and sets the control mode to "mode 1".

In this manner, the electronic control unit 40 of the present embodiment automatical stops and restarts engine operation in accordance with the operating state of the engine 10, the driving state of the vehicle or the operation of the vehicle to reduce the amount of fuel consumed by the engine 10.

As described above, when the driver depresses the clutch pedal 31 and the restarting condition of the engine 10 is satisfied, the constant engagement type starter 20 is driven, the crankshaft 11 connected to the starter 20 is rotated, and the engine speed is increased The engine control executed when the engine 10 is operating in a state in which the engine load is subtle throughout a period in which the restarting process is being executed including when the restarting condition is satisfied will now be discussed in detail. The "state in which the engine load is subtle" is a state in which the amount of the acceleration pedal depressed by the driver is maintained at "0" and the idle switch 45 is activated. When the engine 10 is operating in such a state, the minimum engine speed allowing for the engine operation to be maintained, that is, the target idle speed for when the engine 1 is idling is set as the target engine speed. The continuation of engine combustion from when the restarting condition is satisfied excessively increases the engine speed because the engine load is subtle. This may rev up the engine speed such that the actual engine speed becomes greatly deviated from the target engine speed. To prevent such deviation, under the condition that the engine speed is higher than a predetermined speed, or fuel cutoff speed, which is greater than the target engine speed, the electronic control unit 40 stops injecting fuel into the cylinders #1 , #2, #3, and #4 and performs the so-called fuel cutoff. This prevents the engine speed from excessively increasing while keeping the engine speed higher than or equal to the above idle speed The idle speed is set to, for example, 600 rpm, and the fuel cutoff permission speed is set to, for example, 700 rpm. The idle speed and the fuel cutoff permission speed are set in accordance with the coolant temperature of the engine 10, that is, the warm-up state of the engine. In detail, the two speeds each have a gradient set to be smaller as the coolant temperature increases.

However, as described above, the idle speed is set at the speed that obtains the minimum torque required to maintain operation of the engine 10 in a state in which the load on the engine 10 is subtle. Thus, when load is applied to the engine 10 such that it becomes difficult to maintain the engine speed with the torque produced during the idling operation in a state in which the driver is not depressing the acceleration pedal, engine stall may occur. Engine stall may occur, for example, when the gear of the manual transmission 32 is shifted from a neutral state, which is one of the above-described stopping conditions, to the first gear, and the crankshaft 11 and manual transmission 32 are connected thereby increasing the load applied to the engine 10.

To avoid such an engine stall, the electronic control unit 40 of the present embodiment further improves engine restartability when the manual transmission 32 is shifted from neutral to another gear, normally, the first gear, after the restarting condition for the engine 10 is satisfied and the engine 10 is being operates under a state in which the idle speed is the target engine speed.

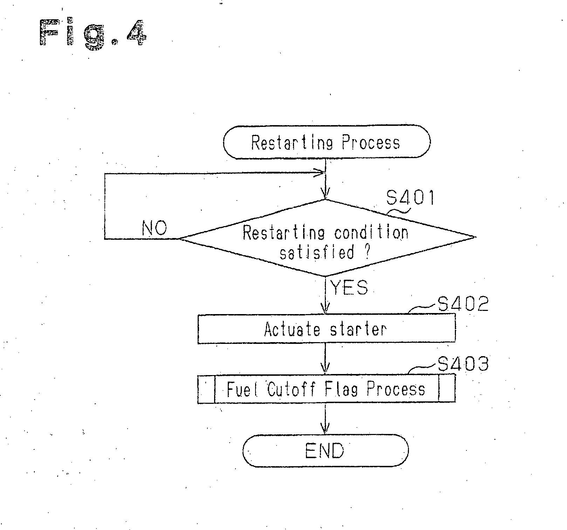

The restarting process executed the electronic control unit 40 will now be described in detail with reference to Figs. 4 to 6.

Fig. 4 is a flowchart showing the restarting process of the engine 10 performed by the electronic control unit 40. The restarting process is performed when the restarting condition is satisfied after the automatic stopping condition is satisfied.

As shown in Fig. 4, in this process, first, when the condition of the engine operation is satisfied after the automatic stopping condition is satisfied, the starter 20 is activated (step S401, step S402). When the starter 20 is fuel is injected into the engine 10 and the injected fuel is ignited. Then, when the electronic control unit 40 determines that the engine 10 is in a predetermined state, that is, in a state in which the engine 10 is operating in a state in which the engine load is subtle, the electronic control unit 40 executes fuel cutoff and stops the injection of fuel into the engine 10 (step S403). In step S403, a fuel cutoff flag process is performed to indicate whether or not to perform a fuel cutoff. More specifically, the "fuel cutoff flag process" sets a flag to "1" when performing fuel cutoff, and sets the flag to "0" when not performing fuel cutoff.

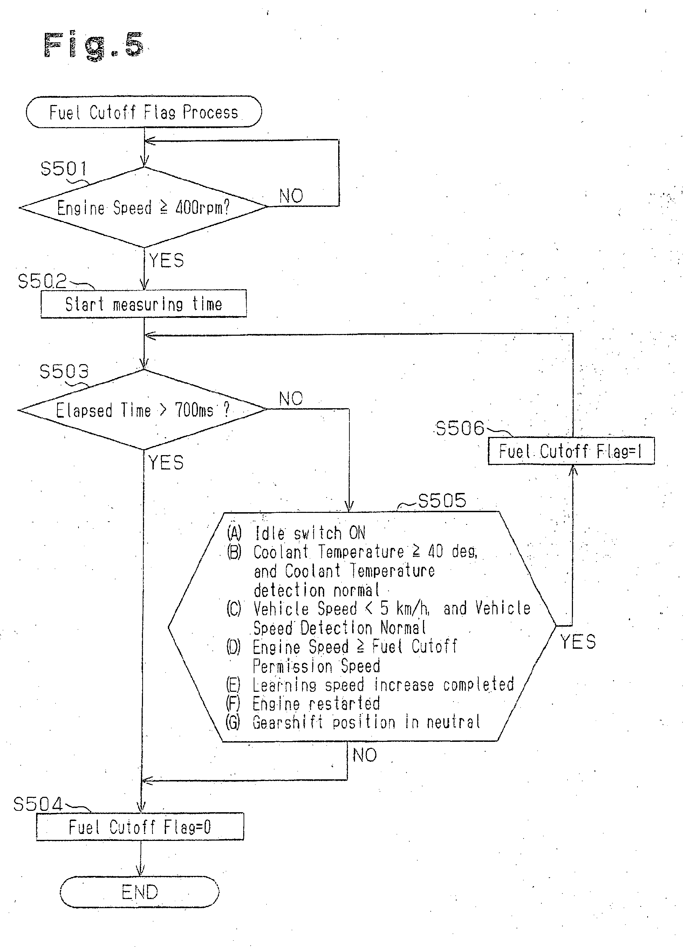

The fuel cutoff flag process (step S403) will now be described in detail with reference to Fig. 5.

First, when the restarting process has activated the starter 20, injected fuel, and ignited the injected fuel, the electronic control unit 40 determines whether or not the engine speed is 400 rpm or higher (step S501). When the engine speed is 400 rpm or higher, time measurement is started from when the engine speed is determined as being 400 rpm or greater (step S502). Next, the electronic control unit 40 determines whether or not 700 ms has elapsed from when determining that the engine speed is 400 rpm or greater (step S503). Hers, 700 ms is the time during which fuel cutoff is permitted. As apparent from the above description, the fuel cutoff is performed for less than 700 ms from when the time measurement starts when a fuel cutoff permission condition is satisfied. Additional, 700 ms is set as the period in which the engine speed does not become lower than the idle that is set as the target engine speed. Further, 400 rpm is the engine speed at which it may be determined that the engine 10 started autonomous operation due to the forcible rotation of the crankshaft 11 by the starter 20, the fuel injection, and the fuel ignition. The measurement of the elapsed time is performed with, for example, a counter of the electronic control unit 40, and the time measurement counter is reset at any timing during a period from when it starts measurement to when the next restarting process is performed. From when time measurement starts in step S502 to until before 700 ms elapses, the electronic control unit 40 determines whether or not the fuel cutoff permission condition is satisfied, that is the following conditions (A) to (G) are all satisfied (step S505):
(A) the idle switch 45 is activated;
(B) the coolant temperature is 40 degrees or greater and the coolant temperature detection is normal;
(C) the vehicle speed is lower than 5 km/h and the vehicle speed detection is normal;
(D) the engine speed is higher than or equal to a fuel cutoff permission speed;
(E) learning speed increase completed;
(F) the engine has been restarted after the automatic stopping condition was satisfied;
(G) the gearshift is in neutral.

When determined that the conditions (A) to (G) are all the fuel cutoff is set to "1" to permit fuel cutoff. Fuel injection is stopped the period in which the fuel flag is set to "1" (step S506). When at least one of the conditions which form the fuel cutoff permission condition are not satisfied, fuel cutoff is not permitted, and the fuel cutoff is set to "0" (step S504). A process or criterion for determining each of the conditions which form the fuel cutoff permission condition will now be discussed. When the idle switch 45 is activated, the driver is not depressing the acceleration pedal. During the restarting process, activation of the idle switch 45 sets the target engine speed to the idle speed of the engine 10, for example, 600 rpm. The coolant temperature detection and the vehicle speed detection are normal when the coolant temperature sensor 43 and the vesicle speed sensor 42 are functioning properly, when there is no abnormality such as wife breakage in a transmission path extending from the sensors 42 and 43 to the electronic control unit 40, when the electronic control unit 40 is receiving signals properly, and when the detection signals of the sensors 42 and 43 are processed normally. The fuel cutoff permission speed is higher than the idle speed set as the target engine speed and set so that the engine speed does not deviate greatly from the target engine speed even when performing the fuel cutoff. The fuel cutoff permission speed is set to, for example, 700 rpm. In the condition of learning speed increase completed, means teaming the intake air amount in rotation with the feedback correction of the engine speed. Further, the phrase "speed increase completed" is a state in which the deviation between the actual engine speed and the target engine speed is adjusted to about ±20 rpm by forcibly performing such learning when the deviation of the engine speed from the target engine speed is large. In addition, a state in which the engine has been restarted after the automatic stopping condition was satisfied is determined from a pattern of the fuel injection performed during starter activation. The gearshift position is determined from the detection signal of the gearshift position sensor 44. The idle speed is variably set in accordance with the coolant temperature, that is, in accordance with the warm-up state of the engine. More specifically, the idle speed is set at a lower speed as the coolant temperature increases. In the present embodiment, the fuel cutoff permission speed is set to be lower as the coolant temperature increases in accordance with changes in the idle speed. This allows for fuel cutoff to be performed earlier than when the coolant temperature is high and the idle speed is low. Accordingly, fuel efficiency is improved. Further, the fuel cutoff permission speed is set to be higher than the idle speed without the deviation therebetween becoming too large This further improves fuel efficiency.

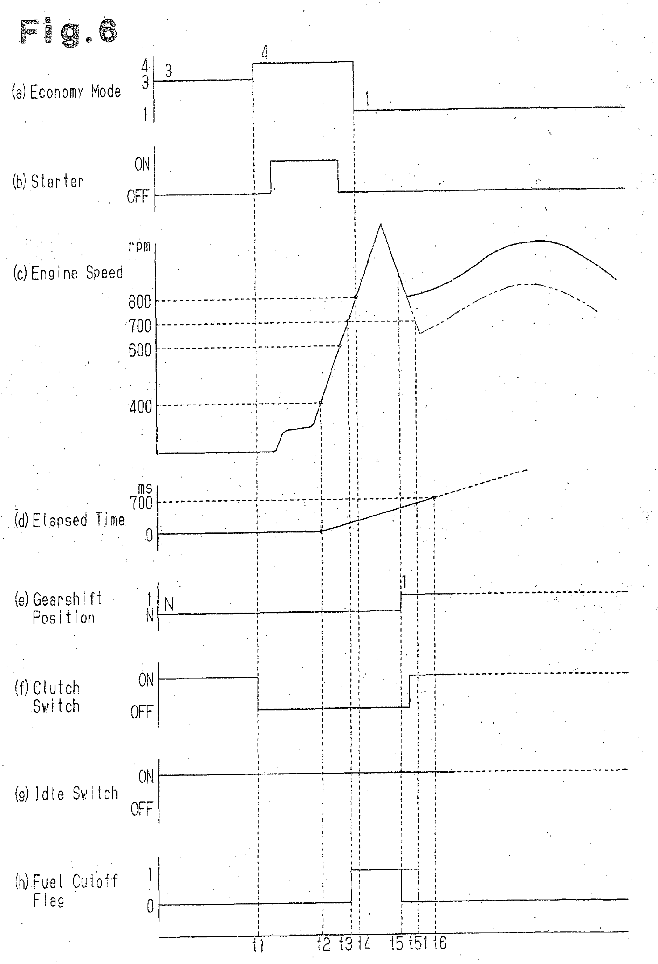

Figs. 6(a) to 6(h) are timing charts of an operation performed in accordance with the restarting process shown in Figs. 4 and 5, in which Fig. 6(a) shows an example of the shifting of driving modes, or economy modes, Fig. 6(b) shows the driving timing of the starter, Fig. 6(c) shows an example of the transition of the engine speed (solid lines), Fig. 6(d) shows the elapsed time, Fig. 6(e) shows the shifting of gearshift positions, Fig. 6(f) shows the activation and deactivation of the clutch switch, Fig. 6(g) shows the activation and deactivation of an idle switch, and Fig. 6(h) shows the behavior of the fuel cutoff flag.

As shown in Fig. 6, in a state in which the automatic stopping condition of the engine operation has been satisfied and the engine 10 has been automatically stopped, at timing t1, when the restarting condition of the engine 10 is satisfied, that is, when the driver depresses the clutch pedal 3 and deactivates the clutch switch 46, the electronic control unit 40 shifts the control mode (economy mode) from "mode 3" to "mode 4". This drives the starter 20, injects fuel, ignites the and increases the engine speed (timing t1 to timing t2). At timing t2, when the engine speed becomes 400 rpm or higher, the measurement of the fuel cutoff permission time is started. Then, when the engine speed becomes 700 rpm or higher, which is the fuel cutoff permission speed, while the other conditions of the fuel cutoff permission, condition are satisfied the fuel cutoff flag is set to "1" and fuel cutoff is executed (timing t3). Next, when the engine speed becomes 800 rpm or greater, the electronic control unit 40 shifts the control mode (economy mode) from "mode 4" to "mode 1" thereby ending the restarting and performing a normal engine operation (timing t4). At timing t5, when the manual transmission 32 is shifted from neutral to the first gear, the fuel cutoff flag is set to "0", and fuel cutoff is prohibited. After the shifting of the gearshift position, the driver stops depressing the clutch pedal 31. This activates the clutch switch 46 again (between aimings t5 and t6). At timing t6, 700 ms has elapsed from when the measurement of time was started.

The double-dashed line in Fig. 6(c) shows the transition of the engine speed when fuel cutoff is performed under a situation in which after the gearshift position of the manual transmission 32 is shifted from neutral to the first gear the other conditions for the fuel cutoff permission condition are satisfied. In this example, at timing t5, the gearshift position is shifted to the first gear. Nevertheless, fuel cutoff is performed, and an increase in the engine load resulting from the gear shifting towers the engine speed (timing t5 to timing t51). When the engine speed becomes lower than 700 rpm, which is the fuel cutoff permission speed, the fuel cutoff flag is set to "0", and fuel cutoff is prohibited. In this example, due to the continuous fuel cutoff, the minimum engine speed is a value between 600 rpm to 700 rpm. However, depending on the timing at which the gearshift position of the manual transmission 32 is shifted or the engine operating state, such as the engine speed, the minimum value may become equal to the idle speed or lower This may stall the engine. However, in the present embodiment, as described above, after the restarting condition is satisfied, when the driver operates the gearshift lever 33 and shifts the manual transmission 32 from neutral to the first gear, fuel cutoff is prohibited regardless of whether the engine operates in a state in which the idle speed is the target engine speed or the engine speed is greater than or equal to the fuel cutoff permission speed. Thus, the engine 10 continues to operate even when the applied engine load is such that the engine operation cannot be continued with the torque obtained when the engine is operating at the idle speed

The electronic control unit 40 of the engine 10 according to the present embodiment has the advantages described below.
(1) In the present embodiment, the gear of the manual transmission 32 is shifted from neutral to the first gear when the restarting process of the engine 10 is being performed, the electronic control unit 40 prohibits fuel cutoff. Thus, fuel injection is performed when the torque produced through the engine operation corresponding to the idle speed becomes insufficient for keeping the engine 10 operating. As a result, under such a situation, the engine speed required to produce the torque that allows for the engine to continue operating is obtained. In other words, the engine speed does not become lower than or equal to the idle speed, the engine 10 is preventing from stalling, and the restartabilty of the engine 10, which may be automatically stopped and restarted, is improved.
(2) When the engine 10, which is capable of being automatically stopped and restarted, is restarted after being automatically stopped, the starting of the engine 10 is completed more quickly than when the engine 10 is normally started by activating the ignition switch. In the present embodiment, the constant engagement type starter 20, which is constancy engaged with the crankshaft 11, is used as a starting device for starting the engine 10. The constant engagement type starter 20 eliminates the need to engage the ring gear 21, which is arranged on the crankshaft 11, with the pinion gear 20b, which is arranged on the output shaft 20a of the starter 20, whenever starting the engine 10. This shortens the time required to start the engine. In this manner, the use of the starter 20 is desirable in the engine 10, which frequently repeats automatic stopping and restarting.
(3) When the acceleration pedal is not depressed subsequent to restarting and the idle switch 45 is activated, the target engine speed is set at the idle speed. This ensures that the engine 10 continues to operate. In addition, the fuel consumption required to maintain an engine speed that is higher than necessary is avoided. This reduces fuel consumption.
(4) A predetermined engine speed that is higher than the idle speed is set as the fuel cutoff permission speed. This ensures that the engine 10 continues to operate even when fuel cutoff is performed and prevents the engine 10 from staffing. Further, the fuel cutoff permission speed is varied in accordance with the temperature of the engine coolant and set to be as the coolant temperature increases. This starts fuel cutoff at an earlier timing when the engine 10 is warm.
(5) The fuel cutoff permission speed and the idle are synchronously varied. This ensures that the fuel cutoff permission speed is higher than the idle speed, which serves as the target engine speed, regardless of the engine temperature.
(6) The maximum fuel cutoff execution period is set to be less than 700 ms from when the engine speed becomes higher than or equal to 400 rpm, which is when it can be assumed that the engine 10 started autonomous operation. Thus, even if the fuel cutoff continues until the maximum time, the engine speed does not become lower than the idle speed, and the operation of the engine 10 is ensured.

It should be apparent to those skilled in the art that the present invention may be embodied in many other specific forms without departing from the spirit or scope of the invention. Particularly, it should be understood that the present invention may be embodied in the following forms.

In the present embodiment, the execution of fuel cutoff is when all seven conditions which form the fuel cutoff permission condition are permitted. However, the present invention is not limited in such a manner. For example, in addition to the elapsed time from when the engine speed becomes 400 rpm or higher is less than 700 ms, the fuel cutoff permission condition is required to include the following conditions:
(A) the idle switch 45 is activated;
(D) the engine speed is higher than or equal to a fuel cutoff permission speed; and
(F) the engine has been restarted after the automatic stopping condition was satisfied.
When these conditions are all satisfied, the execution of fuel cutoff is permitted.

The automatic stopping and restarting conditions of the engine 10 are not limited to the conditions exemplified in the embodiment described above. It is only required that the conditions enable the determination of temporary stopping of the vehicle and recovery from such temporarily vehicle stopping.

The one way clutch 22 is not limited to the structure exemplified in the above embodiment. It is only required that rotation be transmitted from a constant engagement type starter to the crankshaft 11 and that such rotation transmission not be reversed

The engine 10, which serves as the control its a direct injection type engine, which injects fuel directly into the cylinders #1, #2, #3, and #4. However, the engine 10 is not limited to such a type and may be a port injection type engine, which includes a fuel valve in the intake manifold 13. Further, the present invention is not limited to an inline four-cylinder internal combustion engine and may be applied to an engine having any kind of cylinder arrangement.

In the embodiment described above, the restarting process including the fuel cutoff flag process is executed when the automatic stopping condition of the engine 10 is satisfied and the engine operation is thereby completely stopped, that is, when the control mode shifts from "mode 2" to "mode 3" The execution of the restarting process is not limited to when the engine operation comptetely stops. For example, the restarting process may be executed when the automatic stopping condition is satisfied but the engine operation has not completely stopped. In this case, the starter 20 is driven when the restarting conditions are satisfied. Then, the idle speed is set as the target engine speed, and fuel cutoff is executed.

The restarting process of the engine 10 may be executed predetermines cycles regardless of which one of the modes 0 to 4 the control mode is set to.

In the embodiment described above, the fuel cutoff permission period is set to be 700 ms or less at maximum from when the engine speed reaches 400 rpm. The present invention is not limited in such a manner and the maximum time of the fuel cutoff permission time may be set to any value as long as the engine speed does not become lower than the idle speed that is used as the target engine speed. However it is preferable that the fuel cutoff permission period be the longest period in which the engine speed does not become lower than the target engine speed even when continuing fuel cutoff. The period that satisfies this condition is 700 ms.

The fuel cutoff permission speed is not limited to 700 rpm as as it is higher than the idle speed used as the target engine speed and allows for engine operation to be continued at an engine speed that is higher than or to the idle speed during a predetermined period even when fuel cutoff is executed. However, the fuel cutoff permission speed is the minimum operable speed of the engine 10, which is higher than or equal to the idle speed, during a predetermined period from when fuel cutoff is executed. That is, the fuel cutoff permission speed is a speed that enables fuel cutoff to be executed at an earlier stage. Such a speed further reduces fuel consumption. The engine speed that satisfies such a condition is 700 rpm.

The fuel cutoff permission speed is variably set in accordance with the coolant temperature. However, the present invention is not limited in such a manner, and the cutoff permission speed may be set to a certain speed. In such a case, advantages (1) to (3) and (6) of the present invention are obtained, and the process for setting the fuel cutoff permission speed may be eliminated.

The starter 20 does not have to be of a constant engagement type. For example, a starter that engages a gear of its output shaft with a gear of the crankshaft whenever the engine is started may be used instead. Alternatively, a motor arranged in the vehicle other than the starter 20 may be used as a starter. The use of such starters obtains advantages (1) and (3) to (6).

The present examples and embodiments are to be considered as illustrative and not restrictive, and the invention is not to be limited to the details given herein, but may be modified within the scope of the appended claims.

## Claims

1. A controller for a vehicle internal combustion engine (10) that is capable of being automatically stopped and restarted under predetermined vehicle operating conditions, in which the internal combustion engine (10) is connected to a manual transmission (32) operated by a driver to shift gears, wherein the controller restarts the internal combustion engine (10) with a starter (20) when a restarting condition for automatically restarting the internal combustion engine (10) is satisfied after an automatic stopping condition for automatical stopping the internal combustion engine (10), which includes the manual transmission (32) being in neutral, is satisfied, the controller sets as a target engine speed an engine speed that allows for the internal combustion engine (10) to continue operating in a state in which the driver does not depress an acceleration pedal when the internal combustion engine (10) restarts, and the controller executes fuel cutoff to temporarily cut off fuel supply to the internal combustion engine (10) when the engine speed is higher than or equal to a predetermined speed, which is higher than the target engine speed, the controller being **characterized in that**:
execution of the fuel cutoff is prohibited when the manual transmission (32) is shifted to a gear other than neutral after the restarting condition is satisfied.

2. The controller according to claim 1, being **characterised in that** the starter (20) is formed to be in constant engagement with an output shaft of the internal combustion engine (10).

3. The controller according to claim 1 or 2, being **characterized in that** the target engine speed is a target idle speed for when the internal combustion engine (10) is idling, and the predetermined speed is a fuel cutoff permission speed.

4. The controller according to claim 3, **being characterized in that** the fuel cutoff permission speed is set to be a lower speed as the temperature of an engine coolant for cooling the internal combustion engine (10) increases.

5. The controller according to any one of claims 1 to 4, being **charadterized in that** the fuel cutoff is executed during a period in which the engine speed does not become lower than the target engine speed even when the fuel cutoff is continued.

## Patentansprüche

1. Steuerung für eine Fahrzeugbrennkraftmaschine (10), die dazu fähig ist, unter bestimmten Fahrzeugbetriebsbedingungen automatisch gestoppt und wieder angelassen zu werden, wobei die Brennkraftmaschine (10) mit einem manuell geschalteten Getriebe (32) verbunden ist, das durch einen Fahrer zum Wechseln von Gängen betätigt wird, wobei die Steuerung die Brennkraftmaschine (10) mit einem Anlasser (20) wieder anlässt, wenn eine Wiederanlassbedingung zum automatischen Wiederanlassen der Brennkraftmaschine (10) erfüllt ist, nachdem eine automatische Stoppbedingung zum automatischen Stoppen der Brennkraftmaschine (10) erfüllt war, die einschloss, dass das manuell geschaltete Getriebe (32) im Leerlauf ist, wobei die Steuerung als eine Sollmaschinendrehzahl eine Maschinendrehzahl festlegt, die es der Brennkraftmaschine (10) erlaubt, den Betrieb in einem Zustand fortzuführen, in dem der Fahrer ein Gaspedal nicht niederdrückt, wenn die Brennkraftmaschine (10) wieder startet, und die Steuerung eine Kraftstoffabschaltung durchführt, um vorübergehend die Kraftstoffzufuhr zur Brennkraftmaschine (10) abzuschalten, wenn die Maschinendrehzahl höher als eine oder gleich einer vorab festgelegten Drehzahl ist, die höher als die Sollmaschinendrehzahl ist, wobei die Steuerung **dadurch gekennzeichnet ist, dass**:
das Ausführen der Kraftstoffabschaltung verhindert wird, wenn das manuell geschaltete Getriebe (32) in einen Gang außer dem Leerlauf geschaltet wird, nachdem die Wiederanlassbedingung erfüllt ist.

2. Steuerung nach Anspruch 1, **dadurch gekennzeichnet, dass** der Anlasser (20) so konstruiert ist, dass er sich in ständigem Eingriff mit einer Abtriebswelle der Brennkraftmaschine (10) befindet.

3. Steuerung nach Anspruch 1 oder 2, **dadurch gekennzeichnet, dass** die Sollmaschinendrehzahl eine Sollleerlaufdrehzahl zu der Zeit ist, zu der die Brennkraftmaschine (10) leer läuft, und die vorab festgelegte Drehzahl eine Kraftstoffabschalterlaubnisdrehzahl ist.

4. Steuerung nach Anspruch 3, **dadurch gekennzeichnet, dass** die Kraftstoffabschalterlaubnisdrehzahl auf eine geringere Drehzahl eingestellt wird, wenn die Temperatur eines Maschinenkühlmittels zum Kühlen der Brennkraftmaschine (10) steigt.

5. Steuerung nach einem der Ansprüche 1 bis 4, **dadurch gekennzeichnet, dass** die Kraftstoffabschaltung während eines Zeitabschnitts ausgeführt wird, in dem die Brennkraftmaschinendrehzahl selbst dann nicht kleiner als die Sollmaschinendrehzahl wird, wenn die Kraftstoffabschaltung fortgeführt wird.

## Revendications

1. Contrôleur pour un moteur à combustion interne de véhicule (10) qui peut être arrêté et redémarré automatiquement dans des conditions de fonctionnement de véhicule prédéterminées, dans lequel le moteur à combustion interne (10) est relié à une transmission manuelle (32) actionnée par un conducteur pour changer les rapports ; dans lequel le contrôleur redémarre le moteur à combustion interne (10) avec un démarreur (20) lorsqu'une condition de redémarrage pour redémarrer automatiquement le moteur à combustion interne (10) est satisfaite après qu'une condition d'arrêt automatique pour arrêter automatiquement le moteur à combustion interne (10), qui comprend le fait que la transmission manuelle (32) est au neutre, est satisfaite, le contrôleur établit, en tant que vitesse de moteur à combustion interne cible, une vitesse de moteur à combustion interne qui permet au moteur à combustion interne (10) de poursuivre son fonctionnement dans un état dans lequel le conducteur n'enfonce pas une pédale d'accélération lorsque le moteur à combustion interne (10) redémarre, et le contrôleur exécute une coupure de carburant pour couper temporairement l'alimentation en carburant du moteur à combustion interne (10) lorsque la vitesse de moteur à combustion interne est supérieure ou égale à une vitesse prédéterminée, qui est supérieure à la vitesse de moteur à combustion interne cible, le contrôleur étant **caractérisé en ce que** :
l'exécution de la coupure de carburant est interdite lorsque la transmission manuelle (32) est déplacée vers un rapport autre que le neutre après que la condition de redémarrage est satisfaite.

2. Contrôleur selon la revendication 1, **caractérisé en ce que** le démarreur (20) est formé pour être en engagement constant avec un arbre de sortie du moteur à combustion interne (10).

3. Contrôleur selon la revendication 1 ou 2, **caractérisé en ce que** la vitesse de moteur à combustion interne cible est une vitesse de ralenti cible pour la période pendant laquelle le moteur à combustion interne (10) est au ralenti, et la vitesse prédéterminée est une vitesse autorisant une coupure de carburant.

4. Contrôleur selon la revendication 3, **caractérisé en ce que** la vitesse autorisant une coupure de carburant est établie de manière à être une vitesse plus faible alors que la température d'un fluide de refroidissement de moteur à combustion interne pour le refroidissement du moteur à combustion interne (10) augmente.

5. Contrôleur selon l'une quelconque des revendications 1 à 4, **caractérisé en ce que** la coupure de carburant est exécutée pendant une période pendant laquelle la vitesse de moteur à combustion interne ne devient pas inférieure à la vitesse de moteur à combustion interne cible même lorsque la coupure de carburant est poursuivie.
